# EUROPEAN PATENT APPLICATION

(11) **EP 1 878 963 A2**
(43) Date of publication of application: **16.01.2008**
(21) Application number: 07013458.0
(22) Date of filing: 10.07.2007
(51) Int. Cl.: F16L 37/14

(54) **Quick coupling for connecting a pipe and a component, particularly a manifold or a flow control valve, for liquid or gas distribution systems**

(30) Priority: 14.07.2006 IT MI20061372
(71) Applicant: Colombo, Renato, 28021 Borgomanero (Novara) (IT)
(72) Inventor: Colombo, Renato, 28021 Borgomanero (Novara) (IT)
(74) Representative: Alagem Modiano, Lara S.

(57) **Abstract**

A quick coupling for connecting a pipe and a component, particularly a manifold or a flow control valve, of liquid or gas distribution systems. The device comprises a connector (2) which has a first end (2a) which can be associated with a pipe (3) and a second end (2b) starting from which there is a substantially cylindrical or conical seat (4), and a substantially cylindrical or conical sleeve (5) which can be coupled to the seat and is provided at one end of the component to be connected to the pipe. Sealing means (6) are interposed between the seat (4) and the sleeve (5). The sleeve (5) has, on the outer lateral surface of its portion which can be inserted in the seat, at least one axial shoulder (9), which is directed in the opposite direction with respect to the end of the sleeve which can be inserted in the seat (4) and can be positioned, with the insertion of the sleeve (5) in the seat (4), at at least one passage (7) which is defined in the portion of the connector which is occupied by the seat (4) and interferes with the lateral surface of the seat. The passage (7) lies along a substantially rectilinear direction which is perpendicular to the axis of the seat and can be occupied by a locking pin (8) which defines an abutment for the shoulder in order to prevent the axial extraction of the sleeve from the seat.

## Description

The present invention relates to a quick coupling for connecting a pipe and a component, particularly a manifold or a flow control valve, of liquid or gas distribution systems.

As is known, a pipe is connected to a component, particularly a manifold or flow control valve, of liquid or gas distribution systems very often by means of a sleeve-shaped connector, known as nipple, and is provided with two opposite threaded ends which can engage corresponding threaded ends of the component and of the pipe to be connected to each other. Usually, this type of connector is provided, between the two threaded ends, with a portion which generally has a hexagonal prism-like shape and can be engaged by a wrench to screw it onto the pipe and onto the component to be connected to the pipe.

It is also known to connect manifolds or flow control valves to pipes by means of a particular technique which consists in providing, generally on the body of the manifold or of the flow control valve, a substantially cylindrical end portion, on which an axial end of the pipe to be connected to the component is fitted; the axial end of the pipe is then firmly coupled to the cylindrical portion on which it is fitted by compression, performed by means of an appropriately provided clamp-like tool, which produces its plastic deformation, clamping it around such cylindrical portion. The seal between the cylindrical portion and the pipe is achieved by means of a gasket which is interposed between these two elements.

Such connection devices suffer some drawbacks.

The need to use a tool, particularly a wrench or a clamp, which must be operated in order to provide the connection between the pipe and the manifold or the flow control valve, requires an adequate maneuvering space. This need clashes with the need, in particular applications, to reduce as much as possible the space between two contiguous pipes connected to a same manifold or between the flow control valve and other components of the system or more generally the space in the vicinity of the region for connecting the pipe to the manifold or to the flow control valve.

Moreover, such connection devices require a certain time to be able to complete the connection between the pipe and the flow control valve or the manifold.

The aim of the present invention is to obviate the drawbacks noted above by providing a coupling device for connecting a pipe and a component, particularly a manifold or flow control valve, of liquid or gas distribution systems, which requires a limited space around the connection area.

Within this aim, an object of the invention is to provide a device which allows to provide components for liquid or gas distribution systems, particularly manifolds, which are particularly compact.

Another object of the invention is to provide a device which allows to provide the connection between a pipe and a component, particularly a manifold or flow control valve, of liquid or gas distribution systems, very quickly.

Another object of the invention is to provide a coupling device which ensures an adequate seal between the pipe and the component to which the pipe is connected.

Still another object of the invention is to provide a device which can be manufactured at competitive costs.

This aim and these and other objects, which will become better apparent hereinafter, are achieved by a quick coupling for connecting a pipe and a component, particularly a manifold or a flow control valve, of liquid or gas distribution systems, comprising a connector which has a first end which can be associated with a pipe and a second end starting from which, inside said connector, there is a substantially cylindrical or conical seat, and a substantially cylindrical or conical sleeve which can be coupled to said seat and is provided at one end of the component to be connected to said pipe, sealing means being interposed between said seat and said sleeve, characterized in that said sleeve has, on the outer lateral surface of its portion which can be inserted in said seat, at least one axial shoulder, which is directed in the opposite direction with respect to the end of said sleeve which can be inserted in said seat and can be positioned, with the insertion of said sleeve in said seat, at at least one passage which is defined in the portion of said connector which is occupied by said seat and interferes with the lateral surface of said seat; said passage lying along a substantially rectilinear direction which is perpendicular to the axis of said seat and being occupiable by a locking pin which defines an abutment for said at least one shoulder in order to prevent the axial extraction of said sleeve from said seat.

Further characteristics and advantages of the invention will become better apparent from the description of a preferred but not exclusive embodiment of the device according to the invention, illustrated by way of non-limiting example in the accompanying drawings, wherein:
Figure 1 is an exploded perspective view of the device according to the invention; with the component to which the pipe is to be connected shown only partially for the sake of simplicity;
Figure 2 is a side elevation view of the device according to the invention, with the component to which the pipe is to be connected shown only partially for the sake of simplicity;
Figure 3 is a sectional view of Figure 2, taken along the line III-III;
Figures 4 and 5 are sectional views of Figure 2, taken along the line IV-IV, with the locking pin respectively in the position for engagement with the sleeve and in the position for disengagement with respect to the sleeve;
Figure 6 is a sectional view of the device, taken in a manner similar to Figure 3, of a constructive variation of the connector as regards its end which can be connected to the pipe.

With reference to the figures, the device according to the invention comprises a connector 2, which has a first end 2a which can be associated with a pipe 3 and a second end 2b starting from which there is a substantially cylindrical seat 4 inside the connector 2, and a substantially cylindrical sleeve 5, which can be coupled to the seat 4 and is defined at one end of the component, in particular a manifold or flow control valve, which are not shown entirely for the sake of simplicity, to be connected to the pipe 3.

Sealing means 6 are interposed between the seat 4 and the portion of the sleeve 5 which can be inserted in said seat 4.

It should be noted that the seat 4 and the portion of the sleeve 5 which can be inserted in said seat 4 may also be conical.

According to the invention, the sleeve 5 has, on the outer lateral surface of its portion which can be inserted in the seat 4, at least one axial shoulder, which is directed in the opposite direction with respect to the end of the sleeve 5 which can be inserted in the seat 4 and can be positioned, by way of the insertion of the sleeve 5 in the seat 4, at at least one passage 7 which is defined in the portion of the connector 2 which is occupied by the seat 4. The passage 7 interferes with the lateral surface of the seat 4 and lies along a substantially straight direction which is perpendicular to the axis 4a of the seat 4. This passage 7 can be occupied by a pin 8, which defines an abutment for the shoulder, provided on the outer lateral surface of the portion of the sleeve 5 inserted in the seat 4, so as to prevent the axial extraction of the sleeve 5 from the seat 4.

Conveniently, such axial shoulder is defined by a slot 9 provided on the outer lateral surface of the portion of the sleeve 5 which is inserted within the seat 4. In practice, the slot 9 defines two opposite axial shoulders on the outer lateral surface of the sleeve 5 and the pin 8 engages between said two opposite axial shoulders.

Preferably, the slot 9 has a circular extension all around the sleeve 5, and the passage 7, which as mentioned interferes with the lateral surface of the seat 4, is substantially tangent to the bottom of the slot 9, when the sleeve 5 is correctly inserted in the seat 4, so that the pin 8, inserted in said passage 7, engages a portion of the slot 9, producing the axial locking of the sleeve 5 with respect to the seat 4.

The connector 2 has, on the bottom of the seat 4, an internal contact abutment 10, against which the end of the sleeve 5 makes contact at the end of its insertion in the seat 4. In this condition of correct insertion of the sleeve 5 in the seat 4, the slot 9 is located at the passage 7.

Optionally, the slot 9 can be limited to the portion of the sleeve 5 that is designed to be positioned at the passage 7. In this case, the slot 9 can have a straight bottom which is parallel to the passage 7 so that the pin 8, by engaging the bottom of said slot 9, also locks the rotation of the sleeve 5 about its own axis with respect to the seat 4.

The pin 8 can have, at its end which lies opposite with respect to the end inserted in the passage 7, a head 11, which has an enlarged diameter with respect to the portion of the pin 8 that can be inserted in the passage 7, which protrudes partially from the portion of the connector 2 in which the seat 4 is defined, so as to facilitate the grip of the pin 8 during its insertion in the passage 7 or its extraction from the passage 7.

Preferably, the device comprises means for retaining the pin 8 in the passage 7.

Such retention means comprise an elastic ring 12, which has a radial cut 12a so that it can be compressed radially. The elastic ring 12 is inserted and locked coaxially in the inlet of the passage 7. The inlet of the passage 7 has a diameter which is larger than the diameter of the remaining portion of the passage 7 and such as to produce a radial contraction of the elastic ring 12 upon its insertion in said inlet of the passage 7. The end portion 13 of the pin 8 which lies opposite the head 11 has a transverse dimension or diameter which is larger than the inside diameter of the elastic ring 12 after said ring has been inserted in the inlet of the passage 7 but smaller than the inside diameter of the elastic ring 12 before its insertion in the inlet of the passage 7. The remaining portion of the pin 8, except for the head 11, has a diameter which is smaller than the inside diameter of the elastic ring 12 after its insertion in the inlet of the passage 7. In this manner, the elastic ring 12 can be fitted around the pin 8 by passing the end 13 through the elastic ring 12 before its insertion and locking in the inlet of the passage 7. The subsequent insertion of the elastic ring 12 in the inlet of the passage 7, by causing a radial contraction of said elastic ring 12, prevents the pin 8 from being extracted completely from the passage 7, since the elastic ring 12 prevents the extraction of the end portion 13.

Advantageously, the retention means can comprise means for contrasting the sliding of the pin 8 along the passage 7. Such contrast means can be constituted by a ring 14 made of elastically deformable material, for example an O-Ring, which is arranged between the bottom of the inlet of the passage 7 and the elastic ring 12. The inside diameter of the ring 14 is sized so as to mate slidingly with the lateral surface of the pin 8, producing friction which hinders its free sliding along the passage 7.

Preferably, the retention means comprise means for stopping the sliding of the pin 8 along the passage 7 in a first position, in which the pin 8 is inserted partially in the passage 7 but is disengaged from the sleeve 5, i.e., arranged outside the seat 4, and in a second position, in which the pin 8 is inserted in the passage 7 and engages the sleeve 5.

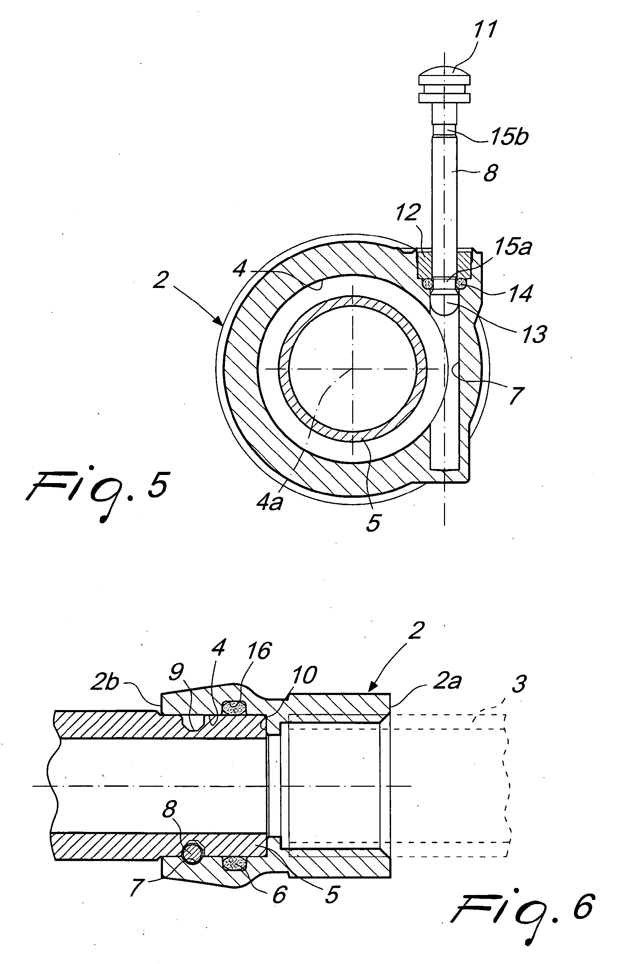

Such stop means comprise, in addition to the ring 14, two circumferential slots 15a and 15b, which are defined on the lateral surface of the pin 8 and are spaced one another along the axial extension of the pin 8. The circumferential slots 15a and 15b are arranged so that the slot 15a is at the ring 14 when the pin 8 has just been inserted in the passage 7 and has not yet engaged the sleeve 5, as shown in Figure 5, and so that the other slot 15b is at the ring 14 when the pin 8 is fully inserted in the passage 7 and therefore engaged with the sleeve 5, as shown in Figure 4. The ring 14, by engaging one slot or the other 15a or 15b, stops the pin 8 in the two corresponding positions.

The sealing means 6, which are interposed between the sleeve 5 and the seat 4, are constituted conveniently by a gasket, preferably an O-Ring, which is accommodated partially in an annular seat 16 defined on the lateral surface of the seat 4 and engages the outer lateral surface of the sleeve 5.

The annular seat 16 for the gasket 6 is spaced toward the inside of the connector 2 with respect to the region occupied by the passage 7.

The component to be connected to the pipe 3 can have different shapes according to the requirements, so long as one of its ends ends with a sleeve 5 which is provided as described above.

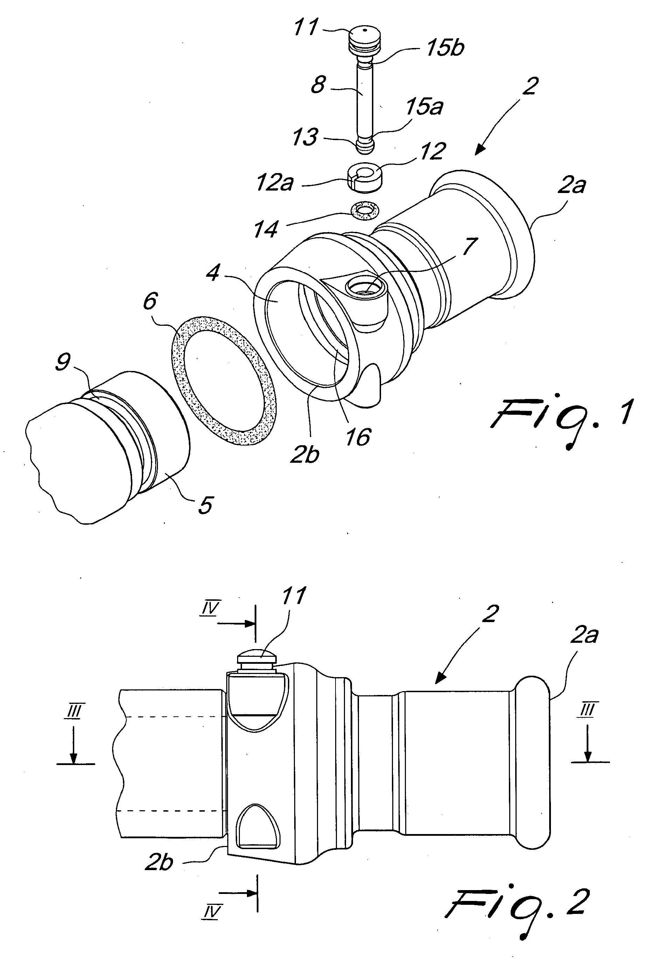

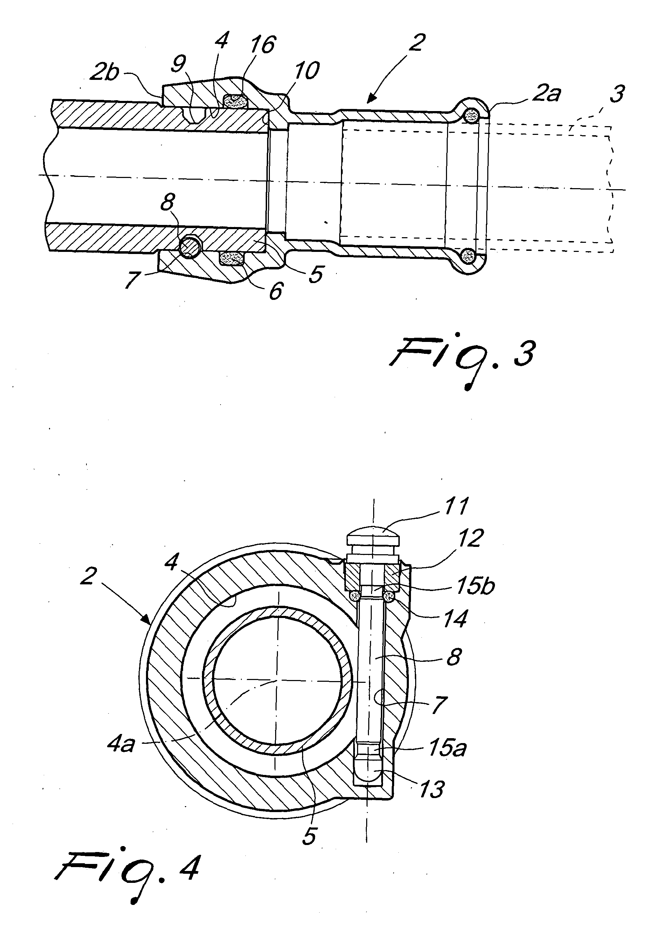

The first end 2a of the connector 2, as shown in Figures 1 to 3, is provided as a compression connector and can be engaged, by plastic deformation which can be performed for example by means of conventional clamp tools, with an axial end of the pipe 3 inserted in said first end 2a of the connector 2. In Figures 1 to 3, the first end 2a of the connector 2 is shown in its condition before its plastic deformation.

As an alternative, the first end 2a of the connector 2 can be provided with an external or internal thread, as shown in Figure 6, which can be coupled to a corresponding thread provided on the axial end of the pipe 3 to be associated with the connector 2.

Also as an alternative, the connection of the pipe 3 to the first end 2a of the connector 2 can be performed with other conventional means or techniques, such as for example by welding, adhesive bonding or others.

The connection of the pipe 3 to the component, particularly a manifold or flow control valve, of a liquid or gas distribution system, by means of the device according to the invention is performed as follows.

The pipe 3 is connected beforehand to the connector 2 by means of a compression coupling or by means of a threaded coupling or by way of other means or connection techniques of a known type, as explained above.

The gasket 6 is arranged in the annular seat 16 and the pin 8 is placed or kept in the first position cited above, i.e., outside the seat 4, as shown in Figure 5.

The connector 2 is then fitted onto the sleeve 5, causing the insertion of the sleeve 5 in the seat 4 until the end of the sleeve 5 rests against the internal contact abutment 10. With the sleeve 5 inserted in the seat 4, the slot 9 is arranged at the passage 7. At this point, the pin 8 is pushed along the passage 7, thus producing the axial locking and optionally also the rotational locking of the connector 2 with respect to the component, to which it is thus connected, as shown in Figures 2, 3 and 4.

To disengage the connector from the component, one proceeds in a sequence which is the reverse of the one described.

It should be noted that the connection of the connector to the component, particularly a manifold or flow control valve, can be performed without requiring the use of tools such as wrenches or clamps and therefore requires an extremely small space in the vicinity of the connection region.

In practice it has been found that the device according to the invention fully achieves the intended aim, since it allows to provide the connection between a pipe and a component, particularly a manifold or flow control valve, of liquid or gas distribution systems with limited space occupation around the connection region, simplifying the operations for connection and also allowing to provide particularly compact components.

It should be noted that the device according to the invention, although conceived in particular to provide the connection of a pipe to components such as manifolds or flow control valves, can also be used to provide the connection between two pipes. In this case, the sleeve 5 is provided at an axial end of a pipe instead of at an end of a manifold or flow control valve.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2006A001372 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A quick coupling for connecting a pipe and a component, particularly a manifold or a flow control valve, of liquid or gas distribution systems, comprising a connector, which has a first end which can be associated with a pipe and a second end starting from which, inside said connector, there is a substantially cylindrical or conical seat, and a substantially cylindrical or conical sleeve which can be coupled to said seat and is provided at one end of the component to be connected to said pipe, sealing means being interposed between said seat and said sleeve, **characterized in that** said sleeve has, on the outer lateral surface of its portion which can be inserted in said seat, at least one axial shoulder, which is directed in the opposite direction with respect to the end of said sleeve which can be inserted in said seat and can be positioned, with the insertion of said sleeve in said seat, at at least one passage which is defined in the portion of said connector which is occupied by said seat and interferes with the lateral surface of said seat; said passage lying along a substantially rectilinear direction which is perpendicular to the axis of said seat and being occupiable by a locking pin which defines an abutment for said at least one shoulder in order to prevent the axial extraction of said sleeve from said seat.

2. The coupling according to claim 1, **characterized in that** said at least one shoulder is defined by a circumferential slot provided on the outer lateral surface of said sleeve.

3. The coupling according to claims 1 and 2, **characterized in that** said circumferential slot defines, on the outer lateral surface of said sleeve, two mutually opposite axial shoulders, said pin engaging between said two mutually opposite axial shoulders.

4. The coupling according to one or more of the preceding claims, **characterized in that** said passage is substantially tangent to the bottom of said circumferential slot provided on the outer lateral surface of said sleeve.

5. The coupling according to one or more of the preceding claims, **characterized in that** the bottom of said seat has an internal contact abutment for the end of said sleeve which is inserted in said seat; said slot being arranged at said passage when said sleeve rests against said internal abutment.

6. The coupling according to one or more of the preceding claims, **characterized in that** it comprises means for retaining said pin in said passage.

7. The coupling according to one or more of the preceding claims, **characterized in that** said retention means comprise an elastically deformable ring, which is arranged coaxially in said passage and can be crossed with friction by said pin.

8. The coupling according to one or more of the preceding claims, **characterized in that** said retention means comprise means for stopping the sliding of said pin along said passage in a first position, in which said pin is inserted partially in said passage but disengaged from said sleeve, and in a second position, in which said pin is inserted in said passage and engages said sleeve.

9. The coupling according to one or more of the preceding claims, **characterized in that** said stop means comprise two circumferential slots which are defined on the lateral surface of said pin and are mutually spaced along the axial extension of said pin, said circumferential slots being engageable by said elastically deformable ring for the retention of said pin in said two positions.

10. The coupling according to one or more of the preceding claims, **characterized in that** said means for retaining the pin in said passage comprise an elastic ring which is inserted and locked coaxially in the inlet of said passage, the end portion of said pin inserted in said passage having a transverse dimension, or diameter, which is larger than the remaining part of the pin which can be inserted in said passage, said substantially rigid ring having an inside diameter which is smaller than the diameter of said end portion of the pin but larger than the diameter of the remaining portion of said pin.

11. The coupling according to one or more of the preceding claims, **characterized in that** said sealing means comprise a gasket which is accommodated partially in an annular seat which is defined on the lateral surface of said seat and engages the outer lateral surface of said sleeve.

12. The coupling according to one or more of the preceding claims, **characterized in that** said annular seat for said gasket is spaced toward the inside of the connector with respect to the region occupied by said at least one passage.

13. The coupling according to one or more of the preceding claims, **characterized in that** said gasket is constituted by an O-Ring.

14. The coupling according to one or more of the preceding claims, **characterized in that** said first end of the connector is provided as a compression connector and can be engaged by elastic deformation with an axial end of the pipe inserted in said first end of the connector.

15. The coupling according to one or more of the preceding claims, **characterized in that** said first end of the connector is provided with an external or internal thread which can be coupled to a corresponding thread provided on the axial end of the pipe to be associated with the connector.

16. The coupling according to one or more of the preceding claims, **characterized in that** said at least one shoulder is defined by a slot which is provided on the outer lateral surface of said sleeve and is limited to a portion of its circumferential extension.

17. A quick coupling for connecting a pipe and a component, particularly a manifold or a flow control valve, of liquid or gas distribution systems, **characterized in that** it comprises one or more of the described and/or illustrated features.
